# EUROPEAN PATENT APPLICATION

(11) **EP 4 289 879 A1**
(43) Date of publication of application: **13.12.2023**
(21) Application number: 22749704.7
(22) Date of filing: 01.02.2022
(51) Int. Cl.: C08G 18/38, G02B 1/04

(54) **OPTICAL MATERIAL PRODUCTION METHOD, POLYMERIZABLE COMPOSITION FOR OPTICAL MATERIAL, AND OPTICAL MATERIAL**

(30) Priority: 03.02.2021 JP 2021015995
(71) Applicant: Mitsui Chemicals, Inc., Tokyo 104-0028 (JP)
(72) Inventor: NUKUI, Marina, Omuta-shi, Fukuoka 836-8610 (JP)
(74) Representative: Mewburn Ellis LLP
(86) International application number: PCT/JP2022/003840
(87) International publication number: WO 2022/168832

(57) **Abstract**

A method of producing an optical material, which comprisesa step of preparing a polymerizable composition containing a polythiol composition and a polyiso(thio)cyanate compound; a determination step which comprises measuring a content of a solvent A which is at least one selected from the group consisting of toluene, acetone, and N,N-dimethylformamide, in the polymerizable composition to check whether the content of the solvent A is within a range of from 0.10% by mass to 1.70% by mass, and, in a case in which the content of the solvent A is within a range of from 0.10% by mass to 1.70% by mass, determining the polymerizable composition as a polymerizable composition for an optical material; and a step of injecting the polymerizable composition for an optical material into a mold for resin molding and curing the same, thereby obtaining an optical material as a resin-molded product.

## Description

### Technical Field

The present disclosure relates to a method of producing an optical material, a polymerizable composition for an optical material, and an optical material.

### Background Art

A polymerizable composition containing a polythiol compound and a polyiso(thio)cyanate compound is known as a polymerizable composition for producing an optical material (e.g., a lens) made of polythiourethane resin (see, e.g., Patent Document 1 below).

Patent Document 1 discloses that by polymerizing a polymerizable composition consisting of a polythiol compound and a polyiso(thio)cyanate compound with a water content of 10 to 300 ppm, a colorless, transparent, distortion-free, high-performance polythiourethane resin optical material (e.g., a lens) can be successfully manufactured without causing striae or white turbidity.

Patent Document 1: WO2008/047626

### SUMMARY OF INVENTION

### Technical Problem

However, the present inventors studied and revealed that in a case in which a solvent A which is at least one selected from the group consisting of toluene, acetone, and N,N-dimethylformamide, which is an organic solvent, is mixed in a polymerizable composition containing a polythiol composition and a polyiso(thio)cyanate compound, air bubbles may be generated in a cured product obtained by curing the polymerizable composition.

As a case in which the solvent A is mixed in the polymerizable composition, for example, the following can be considered:
a case in which under the premise that a reaction tank and/or pipes are washed with the solvent A, the solvent A remains in the reaction tank and/or pipes, and as a result, it is mixed in the polymerizable composition; and
a case in which under the premise that the solvent A is used in a step of producing monomers (i.e., a polythiol composition, a polyiso(thio)cyanate compound, and the like), the solvent A is not sufficiently removed from the monomers, and as a result, it is mixed in the polymerizable composition.

An object of one aspect of the disclosure is to provide an optical material in which the generation of air bubbles is suppressed, a method of producing an optical material capable of producing the above-described optical material, and a polymerizable composition for an optical material suitable for producing the above-described optical material, despite using a polymerizable composition containing a solvent A which is at least one selected from the group consisting of toluene, acetone, and N,N-dimethylformamide.

### Solution to Problem

The solution to the above-described problem includes the following aspects.
<1> A method of producing an optical material, which comprises:
   a step of preparing a polymerizable composition containing a polythiol composition and a polyiso(thio)cyanate compound;
   a determination step which comprises measuring a content of a solvent A which is at least one selected from the group consisting of toluene, acetone, and N,N-dimethylformamide in the polymerizable composition to check whether the content of the solvent A is within a range of from 0.10% by mass to 1.70% by mass, and in a case in which the content of the solvent A is within a range of from 0.10% by mass to 1.70% by mass, determining the polymerizable composition as a polymerizable composition for an optical material; and
   a step of injecting the polymerizable composition for an optical material into a mold for resin molding and curing the same, thereby obtaining an optical material as a resin-molded product.
<2> The method of producing an optical material according to <1>, wherein the determination step comprises adjusting the content of the solvent A to be within a range of from 0.10% by mass to 1.70% by mass in a case in which the content of the solvent A is outside a range of from 0.10% by mass to 1.70% by mass, and determining, as the polymerizable composition for an optical material, the polymerizable composition adjusted such that the content of the solvent A is in a range of from 0.10% by mass to 1.70% by mass.
<3> The method of producing an optical material according to <1> or <2>, wherein the solvent A is toluene.
<4> The method of producing an optical material according to any one of <1> to <3>, wherein the polythiol composition comprises at least one selected from the group consisting of 5,7-dimercaptomethyl-1,11 -dimercapto-3,6,9-trithiaundecane, 4,7-dimercaptomethyl-1,11-dimercapto-3,6,9-trithiaundecane, 4,8-dimercaptomethyl-1,11 -dimercapto-3,6,9-trithiaundecane, 4-mercaptomethyl-1,8-dimercapto-3,6-dithiaoctane, pentaerythritol tetrakis(2-mercaptoacetate), pentaerythritol tetrakis(3-mercaptopropionate), 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, tris(mercaptomethylthio)methane, and ethylene glycol bis(3-mercaptopropionate).
<5> The method of producing an optical material according to any one of <1> to <4>, wherein the polyiso(thio)cyanate compound comprises at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.
<6> The method of producing an optical material according to any one of <1> to <5>, wherein the optical material is a lens.
<7> A polymerizable composition for an optical material, which contains a polythiol composition and a polyiso(thio)cyanate compound, wherein a content of a solvent A which is at least one selected from the group consisting of toluene, acetone, and N,N-dimethylformamide is within a range of from 0.10% by mass to 1.70% by mass.
<8> The polymerizable composition for an optical material according to <7>, wherein the solvent A is toluene.
<9> An optical material, which is a cured product of the polymerizable composition for an optical material according to <7> or <8>, and which is a resin-molded product.

### Advantageous Effects of Invention

According to one aspect of the disclosure, an optical material in which the generation of air bubbles is suppressed, a method of producing an optical material capable of producing the above-described optical material, and a polymerizable composition for an optical material suitable for producing the above-described optical material are provided, despite using a polymerizable composition containing a solvent A which is at least one selected from the group consisting of toluene, acetone, and N,N-dimethylformamide.

### DESCRIPTION OF EMBODIMENTS

A numerical range represented using "to" in the disclosure means a range including the numerical values described before and after "to" as lower and upper limits.

The term "step" used in the disclosure includes not only an independent step but also a step as long as its intended purpose is achieved, even if it cannot be clearly distinguished from other steps.

In the disclosure, in a case in which there are a plurality of substances corresponding to each component in the composition, the amount of each component contained in the composition is the total amount of the plurality of substances present in the composition unless otherwise specified.

In the numerical ranges described in a stepwise manner in the disclosure, the upper limit or lower limit described in one numerical range may be replaced with the upper limit or lower limit of another numerical range described in a stepwise manner. Also, in the numerical ranges described in the disclosure, the upper or lower limits of the numerical ranges may be replaced with the values shown in the Examples.

### [Method of Producing Optical Material]

The method of producing an optical material of the disclosure comprises:
a step of preparing a polymerizable composition containing a polythiol composition and a polyiso(thio)cyanate compound;
a determination step which comprises measuring a content of a solvent A which is at least one selected from the group consisting of toluene, acetone, and N,N-dimethylformamide in the polymerizable composition to check whether the content of the solvent A is within a range of from 0.10% by mass to 1.70% by mass, and in a case in which the content of the solvent A is within a range of from 0.10% by mass to 1.70% by mass, determining the polymerizable composition as a polymerizable composition for an optical material; and
a step of injecting the polymerizable composition for an optical material into a mold for resin molding and curing the same, thereby obtaining an optical material as a resin-molded product.

The method of producing an optical material of the disclosure may comprise other steps, if necessary.

According to the method of producing an optical material of the disclosure, an optical material in which the generation of air bubbles is suppressed can be produced despite using the polymerizable composition mixed with the solvent A.

Specifically, the polymerizable composition determined as a polymerizable composition for an optical material in the determination step is a polymerizable composition containing a polythiol composition, a polyiso(thio)cyanate compound, and a solvent A and having a content of the solvent A in a range of from 0.10% by mass to 1.70% by mass.

In a case in which the content of the solvent A (i.e., the content of the solvent A with respect to the total amount of the polymerizable composition; the same shall apply hereafter) is 1.70% by mass or less, the generation of air bubbles in the optical material to be produced is suppressed.

Solvent A content of 0.10% by mass or more means that the polymerizable composition substantially contains the solvent A.

Each step of the method of producing an optical material of the disclosure will be described below.

### <Preparation Step>

A preparation step is a step of preparing a polymerizable composition containing a polythiol composition and a polyiso(thio)cyanate compound.

The preparation step may be a step of simply preparing the previously produced polymerizable composition, or may be a step of producing the polymerizable composition.

### (Polythiol Composition)

The polymerizable composition prepared in the preparation stem contains at least one polythiol composition.

In the disclosure, the polythiol composition means a composition containing at least one polythiol compound.

In the disclosure, the polythiol compound contained in the polythiol composition is also referred to as "polythiol component."

The polythiol composition may contain, as impurities, a component (e.g., a solvent A) other than the polythiol compound.

It is preferable that the polythiol composition comprises at least one polythiol compound as a main component.

The expression "the polythiol composition comprises at least one polythiol compound as a main component" used herein means that the total content of at least one polythiol compound is 50% or more with respect to the total amount of the polythiol composition.

The total content of at least one polythiol compound is preferably 60% or more, more preferably 70% or more, still more preferably 80% or more with respect to the total amount of the polythiol composition.

Similarly, in the disclosure, in a case in which a composition "comprises one component (hereafter referred to as "component X") as a main component" it means that the content of the component X (the total content of two or more compounds when the component X consists of two or more compounds) is 50% or more with respect to the total amount of the composition.

The content of the component X as a main component is preferably 60% or more, more preferably 70% or more, still more preferably 80% or more with respect to the total amount of the composition.

The symbol "%" used in the description of "comprises...as a main component" refers to the ratio of the total area of all peaks of the component X (e.g., at least one polythiol compound) to the total area of all peaks of the composition (e.g., the polythiol composition) determined by high-performance liquid chromatography (% by area).

Examples of a polythiol composition include a polythiol composition containing a known polythiol compound.

The polythiol compound is not particularly limited as long as it contains two or more thiol groups (also known as mercapto groups).

For the polythiol compound, for example, paragraphs 0034 to 0046 of WO2008/047626 can be referred to, if appropriate.

It is preferable that the polythiol composition comprises at least one (hereafter also referred to as "polythiol component A") selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(2-mercaptoacetate), pentaerythritol tetrakis(3-mercaptopropionate), 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3 -dithietane, 1,1,2,2-tetrakis(mercaptomethylthio)ethane, 3-mercaptomethyl-1,5-dimercapto-2,4-dithiapentane, tris(mercaptomethylthio)methane, and ethylene glycol bis(3-mercaptopropionate).

It is more preferable that the polythiol composition comprises the polythiol component A as a main component.

In this case, the polythiol composition may contain at least one of other components (e.g., other polythiol compounds, components other than polythiol compounds (e.g., a solvent A), and the like) other than the polythiol component A.

Examples of more specific aspects of the polythiol composition include:
an aspect in which the polythiol composition comprises 4,8-dimercaptomethyl-1,11-dimercapto-3,6,9-trithiaundecane, 4,7-dimercaptomethyl-1,11-dimercapto-3,6,9-trithiaundecane, and 5,7-dimercaptomethyl-1,11-dimercapto-3,6,9-trithiaundecane (hereafter, these three compounds may also be collectively referred to as "polythiol component A1") as main components;
an aspect in which the polythiol composition comprises 4-mercaptomethyl-1,8-dimercapto-3,6-dithiaoctane (hereafter also referred to as "polythiol component A2") as a main component;
an aspect in which the polythiol composition comprises pentaerythritol tetrakis(3-mercaptopropionate) (hereafter also referred to as "polythiol component A3") as a main component;
an aspect in which the polythiol composition comprises the polythiol component A1 and the polythiol component A3 as main components; and
an aspect in which the polythiol composition comprises the polythiol component A2 and the polythiol component A3 as main components.

The polythiol composition in each aspect may contain at least one of other components (e.g., other polythiol compounds, other components (e.g., a solvent A) other than polythiol compounds, and the like) other than the main component(s).

### (Polyiso(thio)cyanate Compound)

The polymerizable composition prepared in the preparation step contains at least one polyiso(thio)cyanate compound.

In the disclosure, the polyiso(thio)cyanate compound refers to a compound comprising two or more iso(thio)cyanate groups in one molecule thereof.

In the disclosure, the "iso(thio)cyanate group" refers to an isocyanate group or an isothiocyanate group.

For the polyiso(thio)cyanate compound, for example, paragraphs 0019 to 0033 of WO2008/047626 can be referred to, if appropriate.

The polyiso(thio)cyanate compound comprises preferably at least one (hereafter also referred to as "polyisocyanate component A") selected from the group consisting of pentamethylene diisocyanate,
hexamethylene diisocyanate,
xylylene diisocyanate,
isophorone diisocyanate,
bis(isocyanatomethyl)cyclohexane,
bis(isocyanatocyclohexyl)methane,
2,5-bis(isocyanatomethyl)bicyclo-[2.2.1]-heptane,
2,6-bis(isocyanatomethyl)bicyclo-[2.2.1]-heptane,
tolylene diisocyanate, 4,4'-diphenylmethane diisocyanate, and
phenylene diisocyanate,
more preferably the polyisocyanate component A as a main component.

The polyiso(thio)cyanate compound comprises still more preferably at least one (hereafter also referred to as "polyisocyanate component A1") selected from the group consisting of xylylene diisocyanate,
2,5-bis(isocyanatomethyl)bicyclo-[2.2.1]-heptane, and
2,6-bis(isocyanatomethyl)bicyclo-[2.2.1]-heptane,
yet still more preferably a polyisocyanate component A1 as a main component.

### (Other Components)

The polymerizable composition prepared in the preparation step may contain components other than the components described above.

Examples of other components include a solvent A, a bluing agent, mercapto organic acid, a resin (e.g., acrylic resin, olefin resin, or the like), a cross-linking agent, a light stabilizer, a UV absorber, an antioxidant, an anti-coloring agent, a dye, a filler, and an internal mold-release agent.

Known components can be used as other components.

For other components, for example, paragraphs 0048 to 0049 of WO2008/047626 can be referred to, if appropriate.

### <Determination Step>

The determination step comprises measuring the content of the solvent A in the polymerizable composition prepared in the preparation step to check whether the content of the solvent A is within a range of from 0.10% by mass to 1.70% by mass, and in a case in which the content of the solvent A is within a range of from 0.10% by mass to 1.70% by mass, determining the polymerizable composition as a polymerizable composition for an optical material.

The solvent A in the disclosure is at least one selected from the group consisting of toluene, acetone, and N,N-dimethylformamide.

The solvent A may be a sole solvent of one selected from the group consisting of toluene, acetone, and N,N-dimethylformamide, or may be a mixed solvent of two or more selected from the group consisting of toluene, acetone, and N,N-dimethylformamide.

The solvent A is preferably toluene, acetone, or N,N-dimethylformamide, more preferably toluene.

Measurement of the content of the solvent A (% by mass) in the determination step is performed by ¹H-NMR or ¹³C-NMR.

More specifically, each of the measurement of the content (% by mass) of toluene as the solvent A and the measurement of the content (% by mass) of acetone as the solvent A is performed by ¹H-NMR, and the measurement of the content (% by mass) of N,N-dimethylformamide as the solvent A is performed by ¹³C-NMR.

As described above, in a case in which the content of the solvent A is 1.70% by mass or less, the generation of air bubbles in the produced optical material can be suppressed.

As described above, the solvent A content of 0.10% by mass or more means that the polymerizable composition substantially contains the solvent A.

The reason why the solvent A is contained in the polymerizable composition is not particularly limited.

Examples of the reason why the solvent A is contained in the polymerizable composition include:
a reason that the reaction tank and/or pipes were washed with the solvent A, and the solvent A remained in the reaction tank and/or pipes, resulting in a polymerizable composition mixed with the solvent A; and
a reason that the solvent A was used in the step of producing monomers (i.e., the polythiol composition and the polyiso(thio)cyanate compound), and the solvent A was not sufficiently removed from the monomers, resulting in a polymerizable composition mixed with the solvent A.

In the determination step, in a case in which as a result of measuring the content of the solvent A in the polymerizable composition, the content of the solvent A is within a range of from 0.10% by mass to 1.70% by mass, the polymerizable composition is determined as a polymerizable composition for an optical material.

In other words, a polymerizable composition in which the content of the solvent A is in a range of from 0.10% by mass to 1.70% by mass is determined as a polymerizable composition for an optical material used in the step of obtaining an optical material.

In the determination step, in a case in which as a result of measuring the content of the solvent A in the polymerizable composition, there are no particular restrictions on the handling of the polymerizable composition in which the content of the solvent A is outside a range of from 0.10% by mass to 1.70% by mass.

For example, the determination step may comprise adjusting the content of the solvent A to be within a range of from 0.10% by mass to 1.70% by mass in a case in which the content of the solvent A is outside a range of from 0.10% by mass to 1.70% by mass, and determining, as the polymerizable composition for an optical material, the polymerizable composition adjusted such that the content of the solvent A is within a range of from 0.10% by mass to 1.70% by mass.

Examples of a method of adjusting the content of the solvent A to be within a range of from 0.10% by mass to 1.70% by mass include a method of performing defoaming treatment on the polymerizable composition.

The adjustment method is not limited to defoaming treatment, and other methods such as concentration and dilution may be used.

As described above, in the determination step, the range of the content of the solvent A (hereafter also referred to as "reference range of the content of the solvent A"), which is referred to for determining the polymerizable composition for an optical material, is in a range of from 0.10% by mass to 1.70% by mass.

The lower limit of the reference range for the content of the solvent A may be 0.50% by mass, 0.60% by mass, 0.80% by mass, or 1.10% by mass.

### <Step of Obtaining Optical Material>

The method of producing an optical material of the disclosure comprises a step of injecting the polymerizable composition for an optical material determined in the determination step into a mold for resin molding and curing the same, thereby obtaining an optical material as a resin-molded product.

The mold for resin molding is not particularly limited, but examples thereof include a pair of glass molds held by a gasket, tape, or the like.

In this case, the polymerizable composition for an optical material is injected between a pair of glass molds.

In a case in which the polymerizable composition for an optical material is injected into the mold for resin molding, defoaming treatment, filtration treatment, or the like may be performed, if necessary.

In this step, an optical material as a resin-molded product is obtained by curing the polymerizable composition for an optical material injected into the mold for resin molding.

The polymerizable composition for an optical material is cured by polymerizing the monomers (i.e., the polythiol composition and the polyiso(thio)cyanate compound) in the polymerizable composition for an optical material.

Polymerization of the monomers described above may be performed by heating the polymerizable composition for an optical material. The heating can be carried out by, for example, using a heating device equipped with a mechanism that heats an object to be heated in an oven, water, or the like.

Polymerization conditions (e.g., polymerization temperature, polymerization time, and the like) for polymerizing the monomers in the polymerizable composition for an optical material are set, if appropriate, in consideration of the formulation of the composition, types and amounts of monomers used in the composition, types and amounts of polymerization catalysts used in the composition, the shape of the mold, and the like.

Examples of polymerization temperature include from -50°C to 150°C and from 10°C to 150°C.

Examples of polymerization time include from 1 hour to 200 hours and from 1 hour to 80 hours.

In the step of obtaining an optical material, annealing may be performed on the resin-molded product obtained by curing the polymerizable composition for an optical material.

Examples of annealing temperature include from 50°C to 150°C, from 90°C to 140°C, and from 100°C to 130°C.

Examples of the optical material obtained in the step of obtaining an optical include, but are not particularly limited to, a lens (e.g., eyeglass lens, a camera lens, a polarized lens, and the like) and a light emitting diode (LED).

The optical material obtained in the step of obtaining an optical material is a resin-molded product, and other elements may be added to the resin-molded product.

Examples of other elements include other members and a coating layer provided for the resin-molded product.

Examples of a lens as an example of the optical material include eyeglass lens, a camera lens, and a polarized lens.

Eyeglass lens will be described below as an example of the lens of the disclosure.

Eyeglass lens is a resin-molded product molded into a desired lens shape.

A coating layer may be provided on one side or both sides of the resin-molded product that is an eyeglass lens.

Specific examples of a coating layer include a primer layer, a hard coat layer, an antireflection layer, an antifogging coat layer, an antifouling layer, and a water repellent layer. Each of these coating layers can be used singly, or a plurality of coating layers can be used as a multilayer.

In a case in which a coating layer is applied to both sides of the cured product, the same coating layer or a different coating layer may be applied to each side.

The components of the coating layer can be selected depending on the purpose, if appropriate.

Examples of the components of the coating layer include a resin (e.g., urethane resin, epoxy resin, polyester resin, melamine resin, polyvinyl acetal resin, or the like), an infrared absorber, a light stabilizer, an antioxidant, a photochromic compound, a dye, a pigment, and an antistatic agent.

Regarding the eyeglass lens and the coating layers, descriptions in known references such as Japanese Patent Application Laid-Open (JP-A) No. 2002-194083, WO2017/047745, and WO2008/047626 can be referred to, if appropriate.

### [Polymerizable Composition for Optical Material]

The polymerizable composition for an optical material of the disclosure contains a polythiol composition and a polyiso(thio)cyanate compound, and the content of a solvent A is in a range of from 0.10% by mass to 1.70% by mass.

The solvent A in the polymerizable composition for an optical material of the disclosure has the same meaning as the solvent A described in the method of producing an optical material of the disclosure, and preferred aspects thereof are also the same.

The polymerizable composition for an optical material of the disclosure is the same as the composition determined in the determination step of the method of producing an optical material described above, and preferred aspects thereof are also the same.

Therefore, according to the polymerizable composition for an optical material of the disclosure, an optical material in which the generation of air bubbles is suppressed can be produced.

The polymerizable composition for an optical material of the disclosure may be:
a polymerizable composition for an optical material, for which as a result of measuring the content of a solvent A, the content of the solvent A was originally in a range of from 0.10% by mass to 1.70% by mass; or
a polymerizable composition for an optical material, for which as a result of measuring the content of a solvent A, the content of the solvent A was outside a range of from 0.10% by mass to 1.70% by mass, and then, the content of the solvent A was adjusted to be within a range of from 0.10% by mass to 1.70% by mass.

### [Optical Material]

The optical material of the disclosure is a cured product of the polymerizable composition for an optical material of the disclosure, and is a resin-molded product.

The optical material of the disclosure is the same as the optical material obtained in the step of obtaining the optical material in the method of producing an optical material of the disclosure described above, and preferred aspects thereof are also the same.

Therefore, in the optical material of the disclosure, the generation of air bubbles is suppressed.

### EXAMPLES

Examples of the disclosure are shown below, but the disclosure is not limited to the following Examples.

### [Example 1]

### <Preparation of Polythiol Composition>

A polythiol composition X containing a polythiol component A2 (i.e., 4-mercaptomethyl-1,8-dimercapto-3,6-dithiaoctane) as a main component was prepared.

Next, the polythiol composition X and toluene as a solvent A were mixed, thereby obtaining a polythiol composition Y.

The mixing ratio of the polythiol composition X and toluene was adjusted such that the content of toluene with respect to the total amount of the polymerizable composition before defoaming treatment described below was the charge ratio (% by mass) shown in Table 1.

### <Preparation of Polymerizable Composition>

An m-xylylene diisocyanate (52 parts by mass) as a polyiso(thio)cyanate compound,
dibutyltin dichloride (0.015 parts by mass) as a curing catalyst,
ZELEC (registered trademark) UN (manufactured by Stepan Company) (0.10 parts by mass) as an acidic phosphate-based mold-release agent, and
VIOSORB 583 (manufactured by KYODO CHEMICAL COMPANY LIMITED) as a UV absorber (1.0 parts by mass)
   were mixed at 20°C.

The above-described polythiol composition Y (48 parts by mass) was mixed therewith. Defoaming treatment was performed on the resulting mixture at 600 Pa for 1 hour, thereby obtaining a polymerizable composition.

### <Preparation of Lens>

The polymerizable composition after defoaming treatment was injected between a pair of glass molds fixed with tape. Next, the pair of glass molds into which the polymerizable composition was injected was put into an oven, and the temperature inside the oven was gradually raised from 30°C to 120°C over 24 hours. Through the process above, the monomers (i.e., the polyiso(thio)cyanate compound and the polythiol composition) in the polymerizable composition after defoaming treatment were polymerized such that a resin-molded product (i.e., a resin-molded product that was a cured product of the polymerizable composition) was formed between the pair of glass molds.

Subsequently, the inside of the oven was cooled, and after cooling, the pair of glass molds was removed from the oven, and then the resin-molded product was removed from the pair of glass molds, thereby obtaining the resin-molded product.

The obtained resin-molded product was annealed at 120°C for 2 hours, thereby obtaining a circular plate lens having a thickness of 2.5 mm and a diameter of 75 mm.

### <Measurement and Evaluation>

The following measurement and evaluation were performed for each of the composition and lens described above.

Table 1 shows the results.

### (Content of Toluene as Solvent A with respect to Total Amount of Polymerizable Composition after Defoaming treatment)

The content (% by mass) of toluene as the solvent A with respect to the total amount of the polymerizable composition after defoaming treatment was measured by ¹H-NMR under the following measurement conditions.

### -Measurement conditions-

· Apparatus: ECX-400P manufactured by JEOL Ltd.
· Observation range: 7500 Hz
· Number of scans: 32 scans
· Measurement: solvent Deuterated chloroform
· Details of measurement method: The integrated value of the tert-butyl group signal (9H, 0.77 ppm) of VIOSORB 583 with a known concentration in the polymerizable composition was compared with the integrated value of the methyl group signal (3H, 2.34 ppm) of toluene to calculate the toluene content (% by mass).

### (Air Bubbles in Lens)

The lens was visually observed, and air bubbles in the lens were evaluated according to the following evaluation criteria.

In the following evaluation criteria, A is the rank for which the generation of air bubbles is most suppressed.

### -Criteria for Evaluation of Air Bubbles in Lens-

A. Generation of air bubbles was not confirmed over the entire lens.
B. Air bubbles were observed in the peripheral part of the lens, but no air bubbles were observed in the central part of the lens.
C. Generation of air bubbles was confirmed over the entire lens.

### [Example 2, Comparative Example 1]

The same operation as in Example 1 was performed, except that the toluene content (charge ratio) with respect to the total amount of the polymerizable composition before defoaming treatment was changed, as shown in Table 1.

Table 1 shows the results.

### [Example 101, Comparative Example 101]

The same operation as in Example 1 was performed except for the following points.

Table 1 shows the results.

### -Changes from Example 1-

· Toluene as the solvent A was changed to DMF (i.e., N,N-dimethylformamide) as the solvent A.
· The mixing ratio of the polythiol composition X and DMF was adjusted such that the content of DMF with respect to the total amount of the polymerizable composition before defoaming treatment was the charge ratio (% by mass) shown in Table 1.
· In measuring the content of DMF as the solvent A with respect to the total amount of the polymerizable composition after defoaming treatment, 0.02 parts by mass of acetone was added to 1.0 parts by mass of the polymerizable composition after defoaming treatment and mixed, followed by measurement using ¹³C-NMR under the following measurement conditions.

### -Measurement conditions-

· Apparatus: ECX-400P manufactured by JEOL Ltd.
· Observation range: 31407 Hz
· Number of scans: 10000 scans
· Measurement: solvent Deuterated chloroform
· Details of measurement method:

The integrated value of the methyl group signal (CH₃, 30.7 ppm) of acetone with a known concentration was compared with the integrated value of the methyl group signal (CH₃, 31.2 ppm) of DMF to calculate the content of DMF.

### [Examples 201 and 202]

The same operation as in Example 1 was performed except for the following points.

Table 1 shows the results.

### -Changes from Example 1-

· Toluene as the solvent A was changed to acetone as the solvent A.
· The mixing ratio of the polythiol composition X and acetone was adjusted such that the content of acetone with respect to the total amount of the polymerizable composition after defoaming treatment was the content (% by mass) shown in Table 1.
· ¹H-NMR was performed under the same conditions as in Example 1 to measure the content of acetone as the solvent A with respect to the total amount of the polymerizable composition after defoaming treatment. The integrated value of the tert-butyl group signal (9H, 0.77 ppm) of VIOSORB 583 with a known concentration in the polymerizable composition was compared with the integrated value of the methyl group signal (6H, 2.16 ppm) of acetone to calculate the acetone content.

**[Table 1]**

| | Example 1 | Example 2 | Comparative Example 1 | Example 101 | Comparative Example 101 | Example 201 | Example 202 |
|---|---|---|---|---|---|---|---|
| Solvent A | Toluene | Toluene | Toluene | DMF | DMF | Acetone | Acetone |
| Content of solvent A with respect to total amount of polymerizable composition before defoaming treatment (% by mass) (charge ratio) | 2.77 | 4.55 | 6.65 | 0.94 | 2.77 | 2.77 | 4.55 |
| Content of solvent A with respect to total amount of polymerizable composition after defoaming treatment (% by mass) (Measurement value by ¹H-NMR) | 0.96 | 1.63 | 1.91 | 0.95 | 2.71 | 0.15 | 0.41 |
| Air bubbles in lens | A | B | C | B | C | A | A |

As shown in Table 1, in each Example in which the content of solvent A, which is at least one selected from the group consisting of toluene, acetone, and N,N-dimethylformamide, relative to the total amount of the polymerizable composition after defoaming treatment was within a range of from 0.10% by mass to 1.70% by mass, the generation of air bubbles in the lens was suppressed.

Meanwhile, in Comparative Examples 1 and 101 in which the content of the solvent A was more than 1.70% by mass with respect to the total amount of the polymerizable composition after defoaming treatment, the generation of air bubbles in the lens could not be suppressed.

The above results show that
it is possible to produce an optical material (e.g., a lens) in which the generation of air bubbles is suppressed by a method of producing an optical material, which comprises:
   a step of preparing a polymerizable composition containing a polythiol composition and a polyiso(thio)cyanate compound;
a determination step which comprises measuring a content of a solvent A which is at least one selected from the group consisting of toluene, acetone, and N,N-dimethylformamide in the polymerizable composition to check whether the content of the solvent A is within a range of from 0.10% by mass to 1.70% by mass, and in a case in which the content of the solvent A is within a range of from 0.10% by mass to 1.70% by mass, determining the polymerizable composition as a polymerizable composition for an optical material; and
a step of injecting the polymerizable composition for an optical material into a mold for resin molding and curing the same, thereby obtaining an optical material as a resin-molded product.

Further, the results of Examples 1 and 2, Comparative Example 1, and Examples 201 and 202 also show that it is possible to produce an optical material (e.g., a lens) in which the generation of air bubbles is suppressed by the method of producing an optical material, wherein the determination step comprises a step of adjusting the content of the solvent A to be within a range of from 0.10% by mass to 1.70% by mass by performing defoaming treatment on the polymerizable composition in a case in which the content of the solvent A is outside a range of from 0.10% by mass to 1.70% by mass, determining, as the polymerizable composition for an optical material, the polymerizable composition adjusted such that the content of the solvent A is in a range of from 0.10% by mass to 1.70% by mass, and
injecting the determined polymerizable composition for an optical material into a mold for resin molding and curing the same, thereby obtaining an optical material as a resin-molded product.

Note that the determination step may comprise adjusting the content of the solvent A to be within a range of from 0.10% by mass to 1.70% by mass by performing defoaming treatment on the polymerizable composition in a case in which the content of the solvent A is outside a range of from 0.10% by mass to 1.70% by mass, and determining, as the polymerizable composition for an optical material, the polymerizable composition adjusted such that the content of the solvent A is in a range of from 0.10% by mass to 1.70% by mass.

The disclosure of Japanese Patent Application No. 2021-015995 filed on February 3, 2021 is incorporated herein by reference in its entirety.

All publications, patent applications, and technical standards mentioned herein are incorporated herein by reference to the same extent as if each individual publication, patent application, and technical standard were specifically and individually noted to be incorporated by reference.

## Claims

1. A method of producing an optical material, which comprises:
a step of preparing a polymerizable composition containing a polythiol composition and a polyiso(thio)cyanate compound;
a determination step which comprises measuring a content of a solvent A which is at least one selected from the group consisting of toluene, acetone, and N,N-dimethylformamide, in the polymerizable composition to check whether the content of the solvent A is within a range of from 0.10% by mass to 1.70% by mass, and, in a case in which the content of the solvent A is within a range of from 0.10% by mass to 1.70% by mass, determining the polymerizable composition as a polymerizable composition for an optical material; and
a step of injecting the polymerizable composition for an optical material into a mold for resin molding and curing the same, thereby obtaining an optical material as a resin-molded product.

2. The method of producing an optical material according to claim 1, wherein the determination step comprises adjusting the content of the solvent A to be within a range of from 0.10% by mass to 1.70% by mass in a case in which the content of the solvent A is outside a range of from 0.10% by mass to 1.70% by mass, and determining, as the polymerizable composition for an optical material, the polymerizable composition adjusted such that the content of the solvent A is in a range of from 0.10% by mass to 1.70% by mass.

3. The method of producing an optical material according to claim 1 or 2, wherein the solvent A is toluene.

4. The method of producing an optical material according to any one of claims 1 to 3, wherein the polythiol composition comprises at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(2-mercaptoacetate), pentaerythritol tetrakis(3-mercaptopropionate), 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, tris(mercaptomethylthio)methane, and ethylene glycol bis(3-mercaptopropionate).

5. The method of producing an optical material according to any one of claims 1 to 4, wherein the polyiso(thio)cyanate compound comprises at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

6. The method of producing an optical material according to any one of claims 1 to 5, wherein the optical material is a lens.

7. A polymerizable composition for an optical material, which contains a polythiol composition and a polyiso(thio)cyanate compound, wherein a content of a solvent A which is at least one selected from the group consisting of toluene, acetone, and N,N-dimethylformamide is within a range of from 0.10% by mass to 1.70% by mass.

8. The polymerizable composition for an optical material according to claim 7, wherein the solvent A is toluene.

9. An optical material, which is a cured product of the polymerizable composition for an optical material according to claim 7 or 8, and which is a resin-molded product.
